# EUROPÄISCHE PATENTSCHRIFT

(11) **EP 1 634 755 B1**
(45) Veröffentlichungstag und Bekanntmachung des Hinweises auf die Patenterteilung: **14.05.2008**
(21) Anmeldenummer: 05018974.5
(22) Anmeldetag: 01.09.2005
(51) Int. Cl.: B60K 11/08

(54) **Fahrzeug mit einer Einrichtung zum Zuführen von Luft zu einem Getriebe**
Vehicle including a device to supply air to a transmission
Véhicule avec dispositif d'alimentation d'air vers une transmission

(30) Priorität: 10.09.2004 DE 102004044321
(43) Veröffentlichungstag der Anmeldung: 15.03.2006
(73) Patentinhaber: Bayerische Motoren Werke Aktiengesellschaft, 80809 München (DE)
(72) Erfinder: Prys, Gerhard, 82110 Germering (DE); Riederer, Stefan, 85764 Oberschleissheim (DE)

(56) Entgegenhaltungen:
- EP-A- 0 391 391
- DE-A1- 19 904 515
- GB-A- 2 342 328

## Beschreibung

Die Erfindung betrifft ein Fahrzeug mit einem Getriebe, welches in einem Antriebsstrang des Fahrzeugs angeordnet ist, und mit mindestens einem Radhaus, welches eines der Räder des Fahrzeugs fahrzeugseitig umgibt.

Bei Getrieben der oben genannten Art, wie beispielsweise Schaltgetrieben mit Handschaltung oder Automatikgetrieben, die insbesondere für leistungsstarke Antriebsaggregate ausgelegt sind, besteht grundsätzlich das Problem, dass für eine ausreichende Kühlung der Getriebe gesorgt sein muss. Zum Kühlen werden die Getriebe daher während der Fahrt des zugehörigen Fahrzeugs gezielt mit einem Luftmassenstrom angeströmt, der durch Teile der Unterbodenverkleidung des Fahrzeugs zu dem Getriebe geleitet wird. Eine solche Luftführungseinrichtung ist beispielsweise aus DE 199 04 515 A1 bekannt, gemäß der eine am Unterboden angeordnete Klappe zu einer Belüftung eines im selben Bereich befindlichen Getriebes des Kraftfahrzeugs führen soll.

Bekannte Luftführungseinrichtungen zum Zuführen von Luft zu einem Getriebe in einem Antriebsstrang eines Fahrzeugs weisen jedoch diverse Nachteile auf.

Wegen der am Unterboden von Fahrzeugen herrschenden Strömungen nutzen die bekannten Luftführungseinrichtungen nur eine vergleichsweise geringe Anströmfläche, die zur Wärmeabfuhr (Konvektion) am Getriebe zur Verfügung steht. Es kommt ferner zu einem zusätzlichen Wärmeeintrag durch erwärmte Motorabluft und es entsteht im Tunnel des Antriebsstrangs am Fahrzeug ein Luftstau, der zu einer verstärkten Aufwärmung des Bodenblechs und des Hinterachsgetriebes führt.

Weil bei Wasserdurchfahrten bekannte Unterbodenverkleidungsteile mit deren Luftführungseinrichtungen zum Getriebe einen vergleichsweise großen Strömungswiderstand aufweisen, ist für diese Unterbodenverkleidungsteile ein erhöhter Befestigungsaufwand zu erbringen. Darüber hinaus sind bekannte Unterbodenverkleidungen aufgrund der darin ausgeformten Luftführungseinrichtungen akustisch durchlässig, was ebenfalls nachteilig sein kann.

Der Erfindung liegt die Aufgabe zu Grunde, ein Fahrzeug mit einem Getriebe sowie einer zugehörigen Luftführungseinrichtung bereitzustellen, mit dem bzw. der die oben genannten Probleme weitgehend beseitigt sind und insbesondere eine bedarfsgerechte und den einzuhaltenden Grenzwerten entsprechende Kühlung des Getriebes in einem Antriebsstrang gewährleistet ist.

Die Aufgabe ist erfindungsgemäß mit einem gattungsgemäßen Fahrzeug gelöst, bei dem eine Luftführungseinrichtung vorgesehen ist, die einen am Radhaus angeordneten Lufteinlass und einen sich daran anschließenden Luftführungskanal zum Zuleiten von Luft aus dem Radhaus des Fahrzeugs zum Getriebe aufweist. Ferner ist die Aufgabe mit einer Luftführungseinrichtung zum Zuleiten von Luft zu einem Getriebe eines Fahrzeugs gelöst, welches in einem Antriebsstrang des Fahrzeugs angeordnet ist, die einen Lufteinlass aufweist, der an einem Radhaus des Fahrzeugs anzuordnen ist, und einen Luftführungskanal aufweist, der zum Zuleiten von Luft aus dem Radhaus zum Getriebe zwischen dem Radhaus und dem Getriebe anzuordnen ist.

Erfindungsgemäß wird an einem Fahrzeug das Getriebe des Antriebsstrangs nicht durch einen von der Unterseite des Fahrzeugs abgeleiteten Kühlluftstrom gekühlt, sondern es wird gezielt ein Luftführungskanal ausgebildet, mit dem aus mindestens einer der Radhausschalen des Fahrzeugs Kühlluft zum Getriebe und insbesondere zu dessen Getriebeglocke geleitet wird. Auf diese Weise wird gemäß der Erfindung kalte Umgebungsluft gezielt auf stark temperaturbelastete Getriebebauteile geleitet, ohne dass dazu Öffnungen oder Strömungsführungseinrichtungen am Unterboden des Fahrzeugs vorzusehen sind. Mit dem erfindungsgemäß ausgebildeten Luftführungskanal kann ein vergleichsweise großer Kühlluftstrom zum Getriebe geleitet werden, so dass dort eine effiziente Wärmeabfuhr, insbesondere durch Konvektion, erzielt werden kann.

Der erfindungsgemäße Luftführungskanal ist besonders vorteilhaft an einem Radhaus eines Vorderrades des Fahrzeugs angeordnet. Der Luftführungskanal kann dann sehr gut in das Gesamt-Package-Konzept des Fahrzeugs integriert werden. Ferner kann ein sehr kurzer Strömungsweg durch den Luftführungskanal mit einem entsprechend geringen Strömungswiderstand zur Zuführung von Kühlluft zum Getriebe erreicht werden. Damit am Getriebe eine besonders hohe und besonders gleichmäßige Kühlwirkung erzielt wird, sollte der erfindungsgemäße Luftführungskanal bei einem Fahrzeug mit zwei Vorderrädern an beiden Radhäusern der Vorderräder vorgesehen sein.

Damit ferner die Zuführung von Kühlluft durch den erfindungsgemäßen Luftführungskanal auch ohne zusätzliche Luftfördereinrichtungen in ausreichender Menge erreicht werden kann, sollte der Lufteinlass der erfindungsgemäßen Luftführungseinrichtung am Radhaus in einem Staubereich von während der Fahrt des Fahrzeugs im Radhaus strömender Luft angeordnet sein.

Ein besonders guter Kompromiss zwischen der Package-Situation im Fahrzeug und einer starken selbstangeregten Strömung durch den erfindungsgemäßen Luftführungskanal kann erzielt werden, indem der Lufteinlass bezogen auf die vertikale Erstreckung des Fahrzeugs im unteren Abschnitt des Radhauses ausgebildet ist.

Ferner ist es vorteilhaft, wenn der Lufteinlass bezogen auf die horizontale Erstreckung des Fahrzeugs im hinteren und insbesondere innenseitigen Abschnitt des Radhauses ausgebildet ist. Der Lufteinlass befindet sich dort in einem Bereich hoher Stauwirkung der im Radhaus strömenden Luft. Ferner ist von dort der Strömungsweg der Kühlluft zum Getriebe besonders kurz.

Der erfindungsgemäße Luftführungskanal zum Zuleiten von Luft aus dem Radhaus zum Getriebe sollte gerade nicht in Richtung zu einem Motorraum des Fahrzeugs geöffnet sein. Eine solche Öffnung würde zwar zu einer vermehrten Kühlung im Motorraum führen, verringert jedoch zugleich den Strömungsdruck, der erfindungsgemäß zum Kühlen von temperaturbelasteten Bereichen des Getriebes genutzt werden soll. Erfindungsgemäß wird vielmehr innerhalb des Antriebsstrangs des Fahrzeugs Kühlluft gezielt zum Getriebe zugeführt, wodurch dort eine starke Kühlströmung und eine vergleichsweise hohe Temperaturdifferenz entlang des Antriebsstrangs erreicht werden kann. Diese Faktoren führen im Bereich des Getriebes entlang des Antriebsstrangs zu einem Sog, mit dem gemäß dem Venturi-Prinzip aus dem Motorraum verstärkt Luft abgesaugt wird. Dieses verstärkte Absaugen von Luft führt zu einer besseren Entlüftung des Motorraums und damit auch zu einer verbesserten Kühlung am Antriebsaggregat und entlang des gesamten Antriebsstrangs des Fahrzeugs.

Daher weist der erfindungsgemäße Luftführungskanal auch besonders vorteilhaft einen Luftaustritt auf, mit dem die Luft an die Außenseite des Getriebes geleitetet wird, insbesondere bezogen auf die vertikale Erstreckung des Fahrzeugs auf einen unteren Abschnitt der Außenseite des Getriebes, bei dem im Bereich einer Getriebeölwanne besonders hohe Temperaturen vorliegen.

Damit die oben genannte Sogwirkung erzielt wird, ist es ferner vorteilhaft, wenn an dem erfindungsgemäßen Fahrzeug eine Unterbodenverkleidung vorgesehen ist, welche im Bereich des Getriebes und/oder im restlichen Bereich des Antriebsaggregats und des Antriebsstrangs im Wesentlichen geschlossen gestaltet ist. Eine geschlossene Unterbodenverkleidung ist darüber hinaus insbesondere bei schnellen Wasserdurchfahrten geringeren Belastungen ausgesetzt, so dass ihre Befestigung vergleichsweise einfach gestaltet sein kann.

Schließlich ist es auch vorteilhaft, wenn an der erfindungsgemäßen Luftführungseinrichtung eine Verschlusseinrichtung vorgesehen ist, mit der die durch den Luftführungskanal geleitete Luftströmung zeitweise verringern und/oder vollständig unterbrochen werden kann. Es kann auch sinnvoll sein, dass an der Luftführungseinrichtung eine Fördereinrichtung, beispielsweise in Gestalt eines Getriebes vorgesehen wird, mit dem eine Strömung durch den Luftführungskanal wahlweise erzwungen werden kann. Mit einer derartigen Verschluss- oder Fördereinrichtung kann ein weiterer, bisher nicht genannter Vorteil der erfindungsgemäßen Lösung besonders genutzt werden. Durch das oben genannte erfindungsgemäße Ableiten von Luft aus einem Radhaus heraus zu einem Getriebe wird nämlich auch der Auftrieb des Fahrzeugs an dem zugehörigen Rad verringert. Auf diese Art wird beispielsweise der Vorderachsauftrieb an einem Kraftfahrzeug durch die erfindungsgemäße Lösung in vorteilhafter Weise beeinflusst. Das Auftriebsverhalten an Kraftfahrzeugen ist ein wichtiger Faktor beim fahrdynamischen Verhalten des Fahrzeugs während einer Fahrt. Bei verschiedenen Fahrsituationen kann es gewünscht sein, dass der Auftrieb des Fahrzeugs in dessen Front- und/oder Heckbereich unterschiedlich ist. So kann es beispielsweise für das längsdynamische Verhalten des Fahrzeugs gewünscht sein, dass dieses bei Normalfahrt vorne einen vergleichsweise großen Auftrieb erfährt, der dann bei einem Bremsen des Fahrzeugs zum Einnicken und zu einer verstärkten Belastung der bremsenden Vorderräder führt. Im Gegensatz dazu ist es für die Querdynamik des Fahrzeugs nützlich, wenn es während der Normalfahrt an Vorder- und Hinterachse einen neutralen Auftrieb aufweist. Mit der oben genannten erfindungsgemäßen Weiterbildung kann der Auftrieb des zugehörigen Fahrzeugs durch ein Betätigen der Verschluss- oder Fördereinrichtung für bestimmte fahrdynamische Situationen gezielt beeinflusst werden. Beispielsweise kann durch Öffnen oder Schließen einer Klappe an dem Luftführungskanal gezielt Luft zu dem Getriebe zugeführt oder diese Luftströmung kurzfristig unterbrochen werden. Eine solche kurzzeitige Unterbrechung der zur Kühlung des Getriebes dienenden Luftströmung ist hinsichtlich der am Getriebe sich ergebenen Temperaturschwankungen unproblematisch, denn der thermische Haushalt des Getriebes ist weit träger, als die kurzfristigen Regeleingriffe, welche für eine fahrdynamische Veränderung von Auftriebskräften erforderlich sind.

Zusammenfassend ist festzustellen, dass die erfindungsgemäße Lösung durch die genannte Sogwirkung zu einer besseren Entlüftung des Motorraums beiträgt, wegen des Entfalls von Luftführungsmaßnahmen am Unterboden, den Gesamtluftwiderstand des Fahrzeugs reduziert, eine bessere Absorption am Unterboden gewährleistet und Kosten bei der Befestigung der geringer belasteten Unterbodenverkleidungsteile einspart. Weil erfindungsgemäß auch die Strömungsbedingungen in den Radhäusern optimiert werden, kann die Verschmutzung der Außenhaut um das Radhaus herum durch Spritzwasser verringert und das Auftriebsverhalten des Fahrzeugs am zugehörigen Rad (gezielt) vorteilhaft beeinflusst werden.

Nachfolgend wird ein Ausführungsbeispiel eines erfindungsgemäßen Fahrzeugs und einer zugehörigen Luftführungseinrichtung zum Zuleiten von Luft zu einem Getriebe eines Antriebsstrangs des Fahrzeugs anhand der beigefügten schematischen Zeichnungen näher erläutert. Es zeigen
- Fig. 1: eine vereinfachte Seitenansicht eines Ausführungsbeispiels eines erfindungsgemäßen Fahrzeugs und
- Fig. 2: den Schnitt ||-|| in stark vereinfachter Darstellung.

In den Figuren ist ein Fahrzeug 10 veranschaulicht, das eine Motorhaube 12, einen Kotflügel 14 und eine Frontschürze 16 aufweist. Unter der Motorhaube 12 befindet sich ein nicht dargestelltes Antriebsaggregat, an dem als Teil eines weiter nicht veranschaulichten Antriebsstrangs des Fahrzeugs 10 ein Getriebe 18 angeordnet ist.

Unter dem Kotflügel 14 und bezogen auf die horizontale Erstreckung des Fahrzeugs hinter der Frontschürze 16 befindet sich ein Radhaus 20, in dem ein Rad 22 untergebracht ist. Das Rad 22 gemäß den Figuren ist also das linke Vorderrad des Fahrzeugs 10.

In den Figuren sind ferner mit (teilweise gestrichelten) Pfeillinien 24 Luftströmungswege von jener Luft veranschaulicht, die während einer Fahrt des Fahrzeugs 10 im Bereich des Rades 22 zum Fahrzeug 10 strömt, teilweise im Radhaus 20 gefangen wird und dann unter dem Rad 22 sowie aus dem Radhaus 20 heraus an der Außenseite des Kotflügels 14 vom Fahrzeug 10 wegströmt.

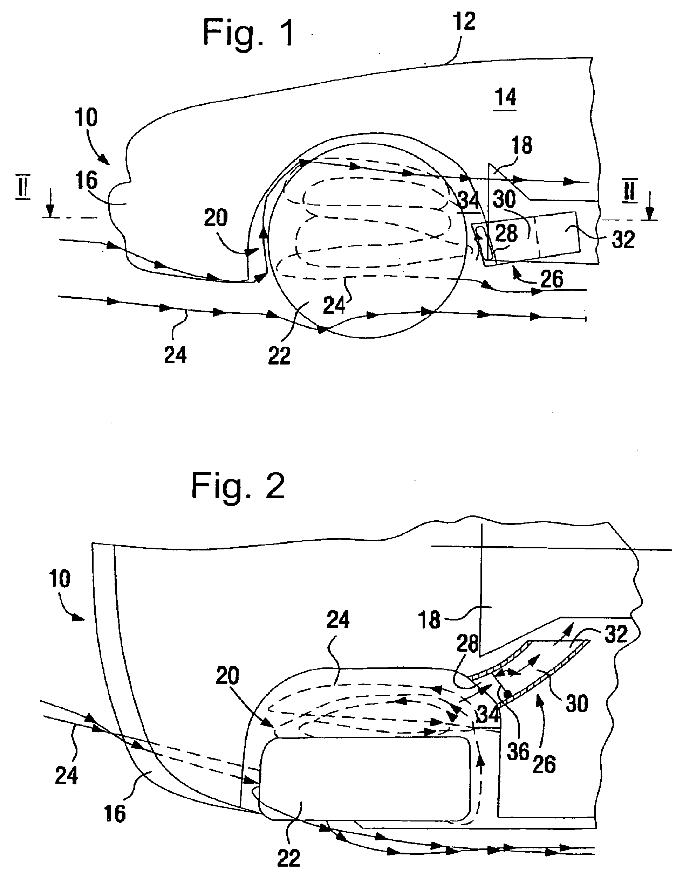

Wie insbesondere in Fig. 2 zu erkennen ist, kommt es dabei zu einer vergleichsweise turbulenten Strömung hinter dem Rad 22 innerhalb des Radhauses 20, wobei im Vergleich zu dem um das Fahrzeug 10 herum vorliegenden Umgebungsdruck in dem Bereich hinter dem Rad 22 insgesamt ein Unterdruck besteht.

Damit das im Fahrzeug befindliche Getriebe 18, welches teilweise erheblichen Temperaturbelastungen unterworfen ist, ausreichend gekühlt wird, ist an dem Fahrzeug 10 eine Luftführungseinrichtung 26 vorgesehen, die mit einem am Radhaus 20 angeordneten Lufteinlass 28, einem sich anschließenden Luftführungskanal 30 und einem Luftauslass 32 gestaltet ist. Der Lufteinlass 28 befindet sich dabei bezogen auf das Fahrzeug 10 in einem unteren, innenseitigen Abschnitt 34 des Radhauses 20.

Wegen der im Radhaus 20 unter dem Rad 22 aufgestauten Strömung der zum Fahrzeug während der Fahrt strömenden Luft liegt im Abschnitt 34 im Vergleich zum restlichen Radhaus 20 ein erhöhter Staudruck vor.

Der Luftführungskanal 30 ist dabei so gestaltet, dass der Luftauslass 32 in der Nähe der Außenseite des Getriebes 18 in einem mittleren bis unteren Bereich dieses Getriebes 18 die durch den Luftführungskanal 30 strömende Luft am Getriebe 18 auftreffen lässt. Das Ansaugen der Luft durch den Luftführungskanal 30 wird dabei gemäß dem Venturiprinzip von der Luftströmung entlang dem Antriebsstrang angeregt. Die derart zum Getriebe 18 geführte Luft führt insbesondere durch Konvektion am Getriebe 18 zu einer gezielten Kühlung der besonders temperaturbelasteten Bereiche dieses Teils des Antriebsstrangs des Fahrzeugs 10.

Die zum Getriebe 18 durch den Luftführungskanal 30 geführte Luft führt ferner am Antriebsstrang zu einer Sogwirkung, mit der verstärkt auch Luft aus dem das oben genannte Antriebsaggregat umgebenden Motorraum unter der Motorhaube 12 herausgesaugt wird.

Ferner wird durch die durch den Luftführungskanal 30 abgeführte Luft der Auftrieb des Fahrzeugs 10 am Rad 22 vorteilhaft verringert.

Damit diese Verringerung des Auftriebs am Fahrzeug 10 für fahrdynamische Regelungen gezielt genutzt und beeinflusst werden kann, ist im Luftführungskanal 30 eine Verschlusseinrichtung 36 in Gestalt einer Klappe vorgesehen, mit der die Luftströmung durch den Luftführungskanal 30 wahlweise verringert und/oder vollständig unterbrochen werden kann. Darüber hinaus kann mit der Verschlusseinrichtung 36 beispielsweise während einer Warmlaufphase des Fahrzeugs 10 und des zugehörigen Antriebsstrangs auch die Kühlung des Getriebes 18 durch die Luftführungseinrichtung 26 hindurch reduziert oder vollständig abgestellt werden, damit das Getriebe 18 während dieser Zeit gerade nicht gekühlt wird.

Bezugszeichenliste
- 10: Fahrzeug
- 12: Motorhaube
- 14: Kotflügel
- 16: Frontschürze
- 18: Getriebe
- 20: Radhaus
- 22: Rad
- 24: Luftströmungsweg
- 26: Luftführungseinrichtung
- 28: Lufteinlass
- 30: Luftführungskanal
- 32: Luftauslass
- 34: Abschnitt des Radhauses
- 36: Verschlusseinrichtung

## Patentansprüche

1. Fahrzeug (10) mit einem Getriebe (18), welches in einem Antriebsstrang des Fahrzeugs (10) angeordnet ist, und mit einem Radhaus (20), welches eines der Räder (22) des Fahrzeugs (10) fahrzeugseitig umgibt, **dadurch gekennzeichnet, dass** eine Luftführungseinrichtung (26) vorgesehen ist, die einen am Radhaus (20) angeordneten Lufteinlass (28) und einen sich daran anschließenden Luftführungskanal (30) zum Zuleiten von Luft aus dem Radhaus (20) zum Getriebe (18) aufweist.

2. Fahrzeug nach Anspruch 1, **dadurch gekennzeichnet, dass** der Lufteinlass (28) an einem Radhaus (20) eines Vorderrades (22) des Fahrzeugs (10) angeordnet ist, wobei insbesondere das Fahrzeug (10) zwei Vorderräder (22) mit zugehörigen Radhäusern (20) aufweist und an jedem der Radhäuser (20) jeweils eine Luftführungseinrichtung (26) zum Zuleiten von Luft zum Getriebe (18) vorgesehen ist.

3. Fahrzeug nach Anspruch 1 oder 2, **dadurch gekennzeichnet, dass** der Lufteinlass (28) am Radhaus (20) in einem Staubereich (34) von während der Fahrt des Fahrzeugs (10) im Radhaus (20) strömender Luft angeordnet ist.

4. Fahrzeug nach einem der vorhergehenden Ansprüche, **dadurch gekennzeichnet, dass** der Lufteinlass (28) bezogen auf die vertikale Erstreckung des Fahrzeugs (10) im unteren Abschnitt (34) des Radhauses (20) ausgebildet ist.

5. Fahrzeug nach einem der vorhergehenden Ansprüche, **dadurch gekennzeichnet, dass** der Lufteinlass (28) bezogen auf die horizontale Erstreckung des Fahrzeugs (10) im hinteren und insbesondere innenseitigen Abschnitt (34) des Radhauses (20) ausgebildet ist.

6. Fahrzeug nach einem der vorhergehenden Ansprüche, **dadurch gekennzeichnet, dass** der Luftführungskanal (30) einen Luftaustritt (32) aufweist, mit dem die Luft an die Außenseite des Getriebes (18) geleitet werden kann, insbesondere bezogen auf die vertikale Erstreckung des Fahrzeugs (10) auf einen unteren Abschnitt der Außenseite des Getriebes (18).

7. Fahrzeug nach einem der vorhergehenden Ansprüche, **dadurch gekennzeichnet, dass** eine Unterbodenverkleidung vorgesehen ist, welche im Bereich des Getriebes (18) im Wesentlichen geschlossen gestaltet ist.

8. Fahrzeug nach einem der vorhergehenden Ansprüche, **dadurch gekennzeichnet, dass** eine Verschlusseinrichtung (36) vorgesehen ist, mit der die durch den Luftführungskanal (30) geleitete Luftströmung zeitweise verringert werden kann.

## Claims

1. A vehicle (10) comprising a gear unit (18) disposed in a line of drive of the vehicle (10) and a wheel housing (20) surrounding the wheels (22) of the vehicle (10) on the side facing the vehicle, **characterised in that** an air guide device (26) is provided and comprises an air inlet (28) on the wheel housing (20) and an adjoining air duct (30) for supplying air from the wheel housing (20) to the gear unit (18).

2. A vehicle according to claim 1, **characterised in that** the air inlet (28) is disposed on a wheel housing (20) of the front wheel (22) of the vehicle (10), wherein especially the vehicle (10) has two front wheels (22) with associated wheel housings (20) and an air guide device (26) is provided on each wheel housing (20) for supplying air to the gear unit (18).

3. A vehicle according to claim 1 or claim 2, **characterised in that** the air inlet (28) on the wheel housing (20) is disposed in a region (34) where air flowing in the wheel housing (20) accumulates while the vehicle (10) is in motion.

4. A vehicle according to any of the preceding claims, **characterised in that** the air inlet (28), relative to the vertical extension of the vehicle (10), is formed in the bottom portion (34) of the wheel housing (20).

5. A vehicle according to any of the preceding claims, **characterised in that** the air inlet (28), relative to the horizontal extension of the vehicle (10), is formed in the rear, especially inner, portion (34) of the wheel housing (20).

6. A vehicle according to any of the preceding claims, **characterised in that** the air duct (30) has an air outlet (32) for conveying the air on the outside of the gear unit (18), the air outlet (30) being on a bottom portion of the outside of the gear unit (18), especially relative to the vertical extension of the vehicle (10).

7. A vehicle according to any of the preceding claims, **characterised in that** an underbody covering is provided and is substantially closed in the region of the gear unit (18).

8. A vehicle according to any of the preceding claims, **characterised in that** a closure device (36) is provided whereby the air flow through the duct (30) can be temporarily reduced.

## Revendications

1. Véhicule automobile (10) avec une transmission (18) disposée dans une ligne d'entraînement de véhicule et un logement de roue (20) entourant du côté du véhicule une des roues (22) de celui-ci,
**caractérisé en ce qu'**
un dispositif de guidage d'air (28) comportant dans le logement de roue (20) une entrée d'air (28) suivie d'un canal de guidage d'air (30) amène sur la transmission l'air provenant du logement de roue (20).

2. Véhicule automobile selon la revendication 1,
**caractérisé en ce que**
l'entrée d'air (28) est disposée dans un logement (20) d'une roue avant (22) du véhicule (10) qui présente deux roues avant (22) et les logements de roue (20) correspondants, un dispositif de guidage d'air (26) étant prévu dans chaque logement de roue (20) pour amener de l'air à la transmission (18).

3. Véhicule automobile selon la revendication 1 ou 2,
**caractérisé en ce que**
l'entrée d'air (28) est disposée sur le logement de roue (20) dans une zone d'accumulation (34) de l'air qui s'écoule dans le logement de roue (20) quand le véhicule (10) circule.

4. Véhicule automobile selon une des revendications précédentes,
**caractérisé en ce que**
l'entrée d'air (28), par rapport à la dimension verticale du véhicule (10) se trouve dans la partie inférieure (34) du logement de roue (20).

5. Véhicule automobile selon une des revendications précédentes,
**caractérisé en ce que**
l'entrée d'air (28), par rapport à la dimension longitudinale du véhicule se trouve dans une zone arrière et en particulier interne (34) du logement de roue (20).

6. Véhicule automobile selon une des revendications précédentes,
**caractérisé en ce que**
le canal de guidage d'air (30) présente une sortie d'air (32) à travers laquelle l'air peut être amené sur la face externe de la transmission (18) et, par rapport à la dimension verticale du véhicule, en particulier sur la partie inférieure de la face externe de la transmission (18).

7. Véhicule automobile selon une des revendications précédentes,
**caractérisé en ce que**
sous la caisse du véhicule un revêtement est essentiellement fermé dans la zone de la transmission (18).

8. Véhicule automobile selon une des revendications précédentes,
**caractérisé en ce qu'**
un dispositif de fermeture (36) permet de réduire temporairement et/ou d'arrêter totalement le courant d'air amené par le canal de guidage (30).
